# EUROPÄISCHE PATENTANMELDUNG

(11) **EP 3 190 079 A1**
(43) Veröffentlichungstag der Anmeldung: **12.07.2017**
(21) Anmeldenummer: 16150432.9
(22) Anmeldetag: 07.01.2016
(51) Int. Cl.: B66B 11/04, F16C 33/66, H02K 5/173, H02K 11/40

(54) **ANTRIEBSMASCHINE FÜR EINE AUFZUGANLAGE MIT ELEKTRISCH LEITFÄHIGER SCHMIERUNG**

(71) Anmelder: Inventio AG, 6052 Hergiswil (CH)
(72) Erfinder: ZAPF, Volker, 6012 Obernau (CH)

(57) **Zusammenfassung**

Es wird eine Antriebsmaschine (1) zum Antreiben eines Tragmittels (3) in einer Aufzuganlage (100) vorgeschlagen. Die Antriebsmaschine (1) weist eine von einem Motor (7) anzutreibende bewegliche Komponente (9), eine statische Komponente (10) und ein Lager (27) zum Lagern der beweglichen Komponente (9) relativ zur statischen Komponente (10) auf. Dabei ist für eine Schmierung der beweglichen Komponente (9) ein elektrisch leitfähiger Schmierstoff in dem Lager (27) aufgenommen.

Durch das Vorsehen eines elektrisch leitfähigen Schmierstoffs in dem Lager (27) kann vermieden werden, dass insbesondere bei Verwendung eines ummantelten Riemens (25) als Tragmittel (3) generierte elektrische Ladungen sich an einer beweglichen Komponente wie beispielsweise einer Treibscheibe (23) anreichern können und es aufgrund dadurch bewirkter hoher elektrischer Spannungen zu schädigenden Überschlägen und zu Elektropitting kommt.

## Beschreibung

Die vorliegende Erfindung betrifft eine Antriebsmaschine zum Antreiben eines Tragmittels in einer Aufzuganlage. Ferner betrifft die Erfindung eine Aufzuganlage mit einer solchen Antriebsmaschine sowie ein Verfahren zum Betreiben einer Antriebsmaschine.

In Aufzuganlagen werden Antriebsmaschinen insbesondere dazu eingesetzt, um eine Aufzugkabine und/oder ein Gegengewicht zwischen verschiedenen Niveaus innerhalb eines Bauwerks zu bewegen. Bei einem häufig eingesetzten Aufzugtyp ist dabei an der Aufzugkabine und/oder dem Gegengewicht ein Tragmittel in Form eines oder mehrerer Seile oder Riemen angebracht. Über ein Verlagern dieses Tragmittels mithilfe der Antriebsmaschine kann somit die Aufzugkabine und/oder das Gegengewicht beispielsweise innerhalb eines Aufzugschachts hin- und herbewegt werden.

Das Tragmittel wird dabei häufig mithilfe einer von der Antriebsmaschine in Rotation zu versetzenden Treibscheibe angetrieben. Die Treibscheibe zusammen mit einer daran angreifenden Welle ist dabei eine von einem Motor der Antriebsmaschine anzutreibende bewegliche Komponente, welche relativ zu statischen Komponenten der Antriebsmaschine wie beispielsweise relativ zu einem Stator des antreibenden Motors oder Halterungen der Antriebsmaschine beweglich, insbesondere rotierbar, gelagert ist.

Ein zum Lagern der beweglichen Komponente relativ zu einer der statischen Komponenten eingesetztes Lager wird dabei im Allgemeinen mit einem Schmierstoff versehen, um für eine ausreichende Schmierung der beweglichen Komponente während ihrer Bewegung relativ zu der statischen Komponente zu sorgen.

Es wurde beobachtet, dass Antriebsmaschinen von Aufzuganlagen über eine Lebensdauer der Aufzuganlage hin einem erheblichen Verschleiß unterliegen können. Insbesondere wurde ein Verschleiß an einem Lager einer solchen Antriebsmaschine beobachtet.

Es kann daher unter anderem ein Bedarf an einer Antriebsmaschine für eine Aufzuganlage bestehen, bei der ein Verschleiß während des Betriebs der Antriebsmaschine reduziert sein kann. Ferner kann ein Bedarf an einer Aufzuganlage bestehen, bei der die Antriebsmaschine einem reduzierten Verschleiß unterliegt. Außerdem kann ein Bedarf in einem Verfahren zum Betreiben einer solchen Antriebsmaschine bestehen, mithilfe dessen ein Verschleiß der Antriebsmaschine vermindert werden kann.

Zumindest einem solchen Bedarf kann mit dem Gegenstand eines der unabhängigen Ansprüche dieser Anmeldung entsprochen werden. Vorteilhafte Ausführungsformen sind in den abhängigen Ansprüchen sowie der nachfolgenden Beschreibung definiert.

Gemäß einem ersten Aspekt der vorliegenden Erfindung wird eine Antriebsmaschine zum Antreiben eines Tragmittels in einer Aufzuganlage beschrieben, wobei die Antriebsmaschine eine von einem Motor anzutreibende bewegliche Komponente, eine statische Komponente und ein Lager zum Lagern der beweglichen Komponente relativ zu der statischen Komponente aufweist. Die vorgeschlagene Antriebsmaschine zeichnet sich dadurch aus, dass für eine Schmierung der beweglichen Komponente ein elektrisch leitfähiger Schmierstoff in dem Lager aufgenommen ist. Eine solche Antriebsmaschine kann in einer Aufzuganlage verwendet werden.

Gemäß einem zweiten Aspekt der Erfindung wird eine Aufzuganlage vorgeschlagen, die eine Antriebsmaschine gemäß einer Ausführungsform des vorgenannten ersten Aspekts der Erfindung, ein von der beweglichen Komponente der Antriebsmaschine angetriebenes und mit dieser in Kontakt stehendes Tragmittel sowie eine an dem Tragmittel angebrachte Aufzugkabine aufweist.

Gemäß einem dritten Aspekt der vorliegenden Erfindung wird ein Verfahren zum Betreiben einer Antriebsmaschine zum Antreiben eines Tragmittels in einer Aufzuganlage beschrieben. Die Antriebsmaschine weist dabei eine von dem Motor anzutreibende bewegliche Komponente, eine statische Komponente und ein Lager zum Lagern der beweglichen Komponente relativ zu der statischen Komponente auf. Das Verfahren zeichnet sich dadurch aus, dass ein elektrisch leitfähiger Schmierstoff in das Lager eingebracht wird, um eine Schmierung der beweglichen Komponente zu bewirken.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Es wurde erkannt, dass der eingangs erwähnte Verschleiß, der an Antriebsmaschinen von Aufzuganlagen und insbesondere deren Lager beobachtet wurde, zumindest teilweise auf innerhalb der Antriebsmaschine bzw. der Lager fließende elektrische Ströme zurückzuführen sein könnte. Das hierin vorgeschlagene Vorsehen eines elektrisch leitfähigen Schmierstoffs in dem Lager einer Antriebsmaschine kann mit hoher Wahrscheinlichkeit zu einer positiven Beeinflussung einer elektrischen Leitfähigkeit innerhalb des Lagers beitragen. Insbesondere können lokale Konzentrationen fließenden elektrischen Stroms reduziert werden und stattdessen ein elektrischer Stromfluss über eine größere Fläche verteilt werden, wodurch elektrische Flussdichten unterhalb eines gegebenenfalls schädigenden Limits gehalten werden können.

Insbesondere bei Antriebsmaschinen einer Aufzuganlage, bei denen die bewegliche Komponente eine sogenannte Treibscheibe ist bzw. die bewegliche Komponente mit einer Treibscheibe elektrisch verbunden ist, wurde beobachtet, dass sich während des Betriebs der Antriebsmaschine, das heißt während die Treibscheibe ein Tragmittel fördert, erhebliche elektrische Spannungen zwischen der beweglichen Treibscheibe und statischen Komponenten der Antriebsmaschine aufbauen können. Es wird vermutet, dass aufgrund solcher hoher elektrischer Spannungen insbesondere innerhalb des die bewegliche Komponente lagernden Lagers elektrische Überschläge auftreten können. In dem Lager ist regelmäßig zwischen der beweglichen Komponente und statischen Komponenten ein Film aus einem Schmierstoff zwischengelagert, um für eine Schmierung der beweglichen Komponente und damit eine reibungsarme Bewegbarkeit der beweglichen Komponente zu sorgen. Während sowohl die bewegliche Komponente als auch statische Komponenten der Antriebsmaschine häufig aus elektrisch leitfähigen Materialen wie zum Beispiel Metallen bestehen, wird der zur Schmierung eingesetzte Schmierstoff bisher regelmäßig als elektrisch isolierender Schmierstoff bereitgestellt. Ein solcher elektrisch isolierender Schmierstoff hat typischerweise einen spezifischen elektrischen Widerstand im Bereich von 10¹¹ bis 10¹⁴ Ω x cm. Eine durch den zwischen der beweglichen Komponente und der statischen Komponente zwischengelagerten elektrisch isolierenden Schmierfilm bewirkte elektrische Isolierung kann insbesondere dazu führen, dass sich die bewegliche Komponente bis auf sehr hohe elektrische Spannungen auflädt. Es wird vermutet, dass es bei derart hohen elektrischen Spannungen dann willkürlich durch den elektrisch isolierenden Schmierfilm hindurch zu elektrischen Überschlägen, das heißt Funkenschlägen, kommen kann. Ein solches Phänomen wird auch als Elektropitting bezeichnet und kann die Oberfläche der den Funkenschlägen ausgesetzten Komponenten lokal schädigen.

Insbesondere bei Antriebsmaschinen, bei denen eine Treibscheibe dazu ausgelegt ist, einen als Tragmittel wirkenden kunststoffummantelten Riemen anzutreiben, wurde beobachtet, dass sich die Treibscheibe und damit elektrisch verbundene Komponenten auf besonders hohe elektrische Spannungen aufladen können. Dies ist wahrscheinlich auf auftretende Reibungen zwischen der Treibscheibe und den darüber geführten Bereichen des kunststoffummantelten Riemens zurückzuführen.

Bisher wurden bewegliche Komponenten von Antriebsmaschinen und/oder mit ihnen elektrisch kontaktierende Bauelemente wie beispielsweise kunststoffummantelte Riemen meist separat geerdet, um unter anderem Schäden durch Elektropitting zu vermeiden.

Es wird nun vorgeschlagen, anstatt des bisher üblicherweise verwendeten elektrisch isolierenden Schmierstoffs einen speziellen elektrisch leitfähigen Schmierstoff in dem Lager der Antriebsmaschine einzubringen.

Als elektrisch leitfähiger Schmierstoff kann beispielsweise ein elektrisch leitfähiges Wälzlagerfett eingesetzt werden, wie es kürzlich von verschiedenen Anbietern entwickelt und auf den Markt gebracht wurde.

Insbesondere kann ein Schmierstoff eingesetzt werden, der einen spezifischen elektrischen Widerstand von weniger als 10⁸ Ω x cm, vorzugsweise weniger als 10⁶ Ω x cm, aufweist.

Es wird vermutet, dass durch die Aufnahme eines geeignet elektrisch leitfähigen Schmierstoffs in dem Lager einer Antriebsmaschine verhindert werden kann, dass sich während des Betriebs der Antriebsmaschine als Antriebseinheit für einen Aufzug schädigend hohe elektrische Spannungen zwischen beweglichen und statischen Komponenten der Antriebsmaschine aufbauen können. Stattdessen werden während des Betriebs generierte elektrische Ladungen aufgrund des durch den elektrisch leitfähigen Schmierstoff bewirkten geringen elektrischen Widerstands zwischen der beweglichen und statischen Komponenten der Antriebsmaschine frühzeitig und vorzugsweise großflächig bzw. homogen abgeleitet, bevor sich lokal hohe elektrische Spannungen aufbauen können. Insbesondere kann mithilfe des elektrisch leitfähigen Schmierstoffs ein großflächiger elektrischer Kontakt zwischen der beweglichen Komponente und statischen Komponenten innerhalb der Antriebsmaschine erzeugt werden, so dass ein elektrischer Stromfluss über eine große Fläche hin erfolgen kann und durch lokale Konzentration bewirkte lokale hohe elektrische Flussdichten vermieden werden können, wodurch eine Schädigung durch lokal auftretendes Elektropitting weitgehend vermieden werden kann.

Einem zur Schmierung vorgesehenen Schmierstoff können regelmäßig verschiedene Arten von Additiven zugesetzt werden. Dabei können die Additive unterschiedlichen Zwecken dienen. Beispielsweise sind Additive bekannt, die einem Schmierstoff eine besonders gute Widerstandsfähigkeit gegenüber auftretenden hohen Temperaturen verleihen können. Andere Additive wiederum können den Schmierstoff derart modifizieren, dass er auch bei sehr hohen Drücken zwischen den zu schmierenden Komponenten stets zuverlässig einen durchgehenden Schmierstofffilm bilden kann.

Für den speziellen Anwendungsfall eines Schmierstoffs in einem Lager einer Antriebsmaschine wurde erkannt, dass es vorteilhaft sein kann, dem Schmierstoff Additive zuzusetzen, die eine Langlebigkeit des Schmierstoffs erhöhen. Dadurch kann berücksichtigt werden, dass Antriebsmaschinen für Aufzuganlagen im Regelfall eine sehr lange Lebensdauer von beispielsweise bis zu 30 Jahren haben sollen und eine Schmierung der darin arbeitenden Komponenten somit über möglichst lange Zeitdauern gegeben sein sollte und möglichst wartungsfrei gewährleistet sein sollte. Während Temperaturstabilität und/oder Druckstabilität für den Anwendungsfall in Aufzug-Antriebsmaschinen weniger relevant erscheinen, wurde somit eine die Langlebigkeit des Schmierstoffs erhöhende Zugabe von geeigneten Additiven als vorteilhaft erkannt. Insbesondere sollten diese Additive jedoch nicht als die elektrische Leitfähigkeit des Schmierstoffs reduzierende Beigaben wirken.

Da mithilfe des elektrisch leitfähigen Schmierstoffs für einen elektrisch leitfähigen Pfad zwischen der beweglichen Komponente und der statischen Komponente einer Antriebsmaschine gesorgt werden kann, kann es vorteilhaft sein, die statische Komponente während des Betriebs der Antriebsmaschine auf ein vorgegebenes elektrisches Potential zu legen. Beispielsweise kann es vorteilhaft sein, die statische Komponente zu erden. An der beweglichen Komponente während des Betriebs generierte elektrische Ladungen können dann über den in dem Lager aufgenommenen elektrisch leitfähigen Schmiermittelfilm hin zur statischen Komponente abfließen. Die bewegliche Komponente wird dabei näherungsweise auf dem gleichen elektrischen Potential wie die statische Komponente gehalten.

Die zuvor genannten Erkenntnisse bzw. Merkmale von Ausführungsformen der hier beschriebenen Antriebsmaschine können auch dazu verwendet werden, um bereits existierende Antriebsmaschinen vorteilhafter betreiben zu können. Bei einem Verfahren zum Betreiben einer Antriebsmaschine wird dabei statt oder ergänzend zu einem herkömmlich eingesetzten Schmierstoff ein elektrisch leitfähiger Schmierstoff in das Lager eingebracht, um die Schmierung der beweglichen Komponente zu bewirken. Durch "Nachrüsten" des elektrisch leitfähigen Schmierstoffs in dem Lager kann somit Elektropitting innerhalb des Lagers während des Betriebs der Antriebsmaschine vermieden oder zumindest reduziert werden und somit ein Verschleiß innerhalb des Lagers drastisch reduziert werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

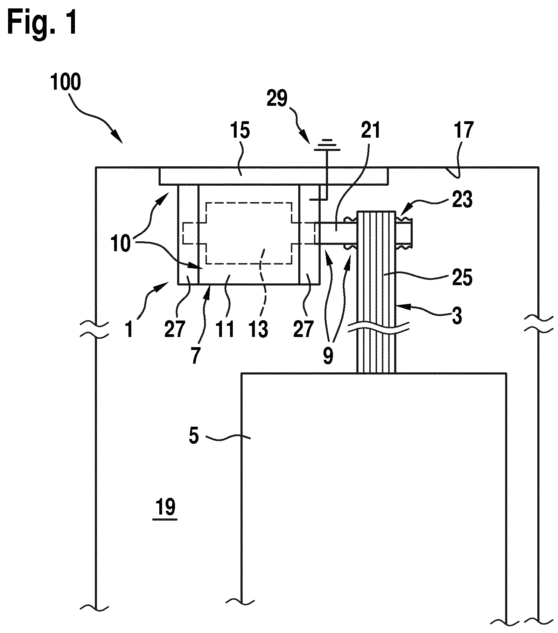

Fig. 1 zeigt eine Antriebsmaschine zum Antreiben eines Tragmittels in einer Aufzuganlage gemäß einer Ausführungsform der vorliegenden Erfindung.

Die Figur ist lediglich schematisch und nicht maßstabsgetreu.

Fig. 1 zeigt eine Aufzuganlage 100 mit einer Antriebsmaschine 1 gemäß einer Ausführungsform der vorliegenden Erfindung. Die Antriebsmaschine 1 dient zum Antreiben eines Tragmittels 3 der Aufzuganlage 100 und damit zum Verlagern einer an dem Tragmittel 3 aufgehängten Aufzugkabine 5. Die Antriebsmaschine 1 weist einen Motor 7 auf, der dazu dient, eine oder mehrere bewegliche Komponenten 9 anzutreiben, vorzugsweise in eine rotierende Bewegung. Der Motor 7 kann hierfür über einen Stator 11 und einen Rotor 13 verfügen. Der Stator 11 ist über Befestigungsmittel 15 statisch beispielsweise an einer Decke 17 eines Aufzugschachts 19 befestigt. Der Rotor 13 kann sich relativ zu dem Stator 11 rotierend bewegen und dabei beispielsweise eine mit ihm verbundene Welle 21 rotierend antreiben. Die Welle 21 kann somit als Beispiel einer beweglichen Komponente 9 wirken. Die Welle 21 kann rotationsfest mit einer Treibscheibe 23 verbunden sein, über die das Tragmittel 3 in Form eines beispielsweise kunststoffummantelten Riemens 25 verläuft und somit von der Treibscheibe 23 angetrieben wird.

Um die Welle 21 und/oder andere beweglichen Komponenten 9 der Antriebsmaschine 1 relativ zu statischen Komponenten 10 wie dem Stator 11 und/oder dem Befestigungsmittel 15 drehbar halten zu können, sind an der Antriebsmaschine 1 Lager 27 vorgesehen. Diese Lager 27 können beispielsweise als Wälzlager, Kugellager, Nadellager oder Ähnliches ausgebildet sein.

Erfindungsgemäß ist in zumindest eines der Lager 27, mit denen eine bewegliche Komponente 9 relativ zu einer statischen Komponente 10 gelagert wird, ein elektrisch leitfähiger Schmierstoff eingebracht, um für eine Schmierung der beweglichen Komponente 9 während ihrer Relativbewegung zu der statischen Komponente 10 zu sorgen.

Der an der Treibscheibe 23 während des Betriebs der Antriebsmaschine 1 entlanglaufende als Tragmittel 3 dienende ummantelte Riemen 25 kann aufgrund von Reibung zwischen einer Oberfläche der Treibscheibe 23 und einer Oberfläche des Riemens 25 zu einer Erzeugung elektrischer Ladungen führen. Diese Ladungen reichern sich in der Treibscheibe 23 an und werden, da diese meist aus einem elektrisch leitfähigen Material wie beispielsweise einem Metall besteht, an die meist ebenfalls elektrisch leitfähig ausgebildete Welle 21 weitergegeben. Von dort aus können die elektrischen Ladungen über den Schmierfilm aus elektrisch leitfähigem Schmierstoff in dem Lager 27 auf damit elektrisch leitfähig verbundene statische Komponenten 10 übergeleitet werden. Sofern diese beispielsweise auf ein festes elektrisches Potential gesetzt sind, das heißt beispielsweise mit einer Erdung 29 verbunden sind, können sich somit weder in den statischen Komponenten 10 noch in den damit elektrisch leitfähig verbundenen beweglichen Komponenten 9 erheblich Ladungen ansammeln und somit eine übermäßige elektrische Spannung aufbauen. Stattdessen fließen solche Ladungen schnell ab, so dass elektrische Überschläge zwischen den beweglichen Komponenten 9 und den statischen Komponenten 10 weitgehend vermieden werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Antriebsmaschine
- 3: Tragmittel
- 5: Aufzugkabine
- 7: Motor
- 9: bewegliche Komponenten
- 10: statische Komponenten
- 11: Stator
- 13: Rotor
- 15: Befestigungsmittel
- 17: Decke
- 19: Aufzugschacht
- 21: Welle
- 23: Treibscheibe
- 25: Riemen
- 27: Lager
- 29: Erdung

## Patentansprüche

1. Antriebsmaschine (1) zum Antreiben eines Tragmittels (3) in einer Aufzuganlage (100), wobei die Antriebsmaschine (1) aufweist:
eine von einem Motor (7) anzutreibende bewegliche Komponente (9);
eine statische Komponente (10);
ein Lager (27) zum Lagern der beweglichen Komponente (9) relativ zur statischen Komponente (10);
wobei für eine Schmierung der beweglichen Komponente (9) ein elektrisch leitfähiger Schmierstoff in dem Lager (27) aufgenommen ist.

2. Antriebsmaschine nach Anspruch 1, wobei der Schmierstoff ein elektrisch leitfähiges Wälzlagerfett ist.

3. Antriebsmaschine nach einem der vorangehenden Ansprüche, wobei der Schmierstoff einen spezifischen elektrischen Widerstand von weniger als 10^8 Ω cm, vorzugsweise weniger als 10^6 Ω cm, aufweist.

4. Antriebsmaschine nach einem der vorangehenden Ansprüche, wobei der Schmierstoff Additive enthält, die eine Langlebigkeit des Schmierstoffes erhöhen,

5. Antriebsmaschine nach einem der vorangehenden Ansprüche, wobei die bewegliche Komponente (9) eine Treibscheibe (23) ist oder mit einer Treibscheibe (23) elektrisch verbunden ist.

6. Antriebsmaschine nach Anspruch 5, wobei die Treibscheibe (23) dazu ausgelegt ist, einen als das Tragmittel (3) wirkenden kunststoffummantelten Riemen (25) anzutreiben.

7. Antriebsmaschine nach einem der vorangehenden Ansprüche, wobei die statische Komponente (10) auf ein vorgegebenes elektrisches Potential (29) gelegt ist.

8. Aufzuganlage (100) aufweisend:
eine Antriebsmaschine (1) gemäß einem der Ansprüche 1 bis 6;
ein von der beweglichen Komponente (9) der Antriebsmaschine (1) angetriebenes und mit dieser in Kontakt stehendes Tragmittel (3);
eine an dem Tragmittel (3) angebrachte Aufzugkabine (5).

9. Verfahren zum Betreiben einer Antriebsmaschine (1) zum Antreiben eines Tragmittels (3) in einer Aufzuganlage (100), wobei die Antriebsmaschine (1) aufweist:
eine von einem Motor (7) anzutreibende bewegliche Komponente (9);
eine statische Komponente (10);
ein Lager (27) zum Lagern der beweglichen Komponente (9) relativ zur statischen Komponente (10);
wobei das Verfahren aufweist:
Einbringen eines elektrisch leitfähigen Schmierstoffs in das Lager (27) zum Bewirken einer Schmierung der beweglichen Komponente (9).

10. Verwendung einer Antriebsmaschine (1) gemäß einem der Ansprüche 1 bis 7 in einer Aufzuganlage (100).
